# EUROPÄISCHE PATENTANMELDUNG

(11) **EP 2 495 165 A1**
(43) Veröffentlichungstag der Anmeldung: **05.09.2012**
(21) Anmeldenummer: 12000453.6
(22) Anmeldetag: 26.01.2012
(51) Int. Cl.: B63H 21/16, B63H 21/32

(54) **Marineschiff mit Gasturbinenantrieb**

(30) Priorität: 03.03.2011 DE 102011013164
(71) Anmelder: Blohm + Voss Naval GmbH, 20457 Hamburg (DE)
(72) Erfinder: Thieme, Christian, 19258 Nieklitz (DE)
(74) Vertreter: Hansmann, Dierk

(57) **Zusammenfassung**

Bei einem Marineschiff (8) mit einem Gasturbinenantrieb und einem etwa horizontalen Abgaskanal (7), der über einen Krümmer (6) und einen Kollektor (5) mit einem die Turbine (1) umgebenden Gehäuse (2) verbunden ist und das Gehäuse (2) eine Zuführung (3) für Kühlluft aufweist. Hierbei besitzt der Krümmer (6) und Kollektor (5) eine äussere Umhüllung (9) unter Bildung eines Ringraumes (10), der als Verlängerung und Verbindung mit dem umgebenen Gehäuse (2) der Gasturbine (1) ausgebildet ist, wobei die ansaugbare Kühlluft im Bereich des achterlichen Abgaskanals (7) zugemischt wird.

## Beschreibung

Die Erfindung bezieht sich auf ein Marineschiff mit Gasturbinenantrieb und einem achterlichen etwa horizontalen Abgaskanal, der über einen Krümmer und Kollektor mit der Gasturbine und einem die Gasturbine umgebendes Gehäuse als Kapselung verbunden ist, wobei das Gehäuse eine Zuführung für Kühlluft aufweist und dem Krümmer zuführbar ist.

Es ist bekannt, bei Gasturbinenabgasanlagen das Abgas nach oben zum Schornstein zu leiten. Somit ist bei Gasturbinen-Kapsel-Anlagen die Schnittstelle zum Abgaskanal oben bzw. über einen Kollektor die Abgasströmung bereits nach oben gerichtet, um einen strömungs- und widerstandsgünstigen Verlauf zu gewährleisten.

Bei einer erforderlichen Abgaskanalführung für Marineschiffe zur achterlichen Abführung nach achtern besteht die Problematik, dass durch den erforderlichen Krümmer bei gegebenen hohen Abgasgeschwindigkeiten die Druckverluste stark ansteigen. Zudem werden in dem sensiblen Bereich der Pumpenstrahlwirkung und Absaugung der Kapselkühlluft die Strömungs- bzw. Druckverhältnisse stark gestört. Das führt dazu, dass es schwierig ist, die Gegendruckwerte an der Gasturbine bzw. die Forderungen bezüglich eines Unterdruckes in der Kapsel einzuhalten Eine Möglichkeit hierbei besteht darin, im Unterbereich des Krümmers mehrere Leitschaufeln anzuordnen, um eine Verwirbelung zu vermeiden. Bedingt durch die hohen Temperaturen und Strömungsgeschwindigkeiten kommt es bei dieser Anordnung in der Praxis zu Schwierigkeiten.

Die Aufgabe der Erfindung ist es, eine einfache Ausbildung zu schaffen, die einen einfachen Aufbau mit niedrigen Druckverlusten ermöglicht und Druckwerte mit konstantem Unterdruck in der Kapsel sowie eine Verringerung eines Abgasgegendruckes gewährleistet.

Die Lösung dieser Aufgabe erfolgt erfindungsgemäss dadurch, dass Krümmer und Kollektor in einer äusseren Umhüllung unter Bildung eines Ringraumes als Verlängerung und Verbindung mit dem umgebenen Gehäuse der Gasturbine angeordnet und die ansaugbare Kühlluft im Bereich des achterlichen Abgaskanals zumischbar ist.

Hierdurch wird ein konstruktiv einfacher Aufbau ohne Einbauten im Abgaskanal ermöglicht. Ferner wird ein absoluter Unterdruck in der Kapsel der Turbine mit einer Verringerung eines Abgasgegendruckes an der Gasturbine mit einer Wasserfalle zum Schutz der Turbine gewährleistet.

Eine günstige Ausbildung besteht darin, dass der Austrittsbereich des Krümmers im Abgaskanal gegenüber dem der Gasturbine zugewandten Eintrittsbereich des Krümmers verjüngt ausgebildet ist.

In der Zeichnung ist ein Ausführungsbeispiel der Erfindung schematisch dargestellt.

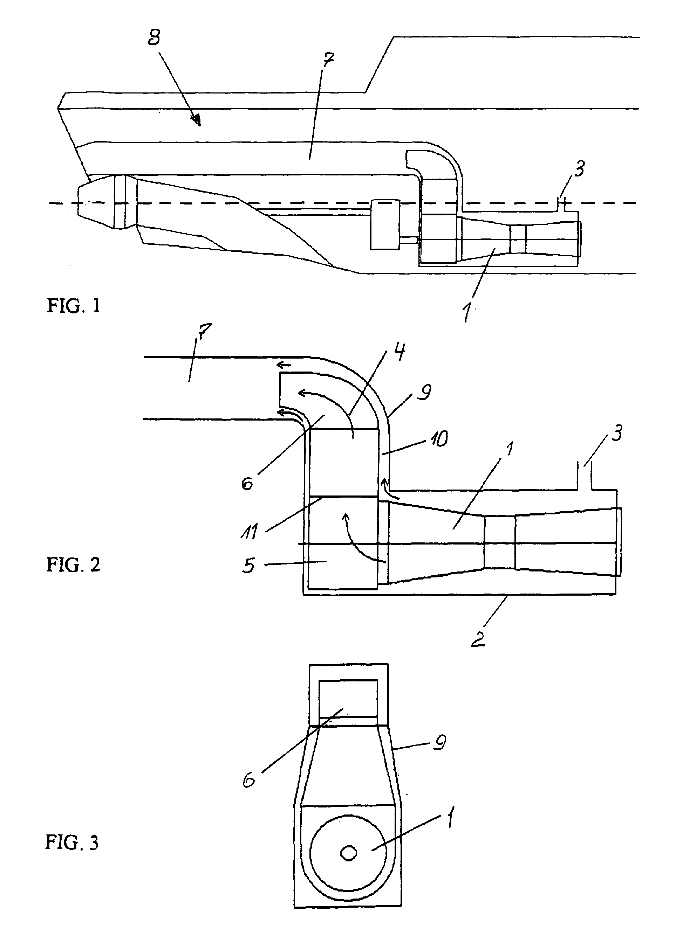

- Fig. 1: eine Prinzipanordnung eines Gasturbinenantriebes in einem Marineschiff
- Fig. 2: eine vergrößerte Darstellung einer Gasturbine mit Abgaskanal
- Fig. 3: eine prinzipielle Vorderansicht gemäss Fig. 2

Die Anordnung besteht aus einer Gasturbine 1, die in einem umgebenden Gehäuse 2 als Kapsel angeordnet ist, wobei das Gehäuse 2 eine Kühlluftzuführung 3 aufweist. Das Gasturbinenabgas gemäss Pfeil 4 wird über einen Kollektor 5 und einem sich zur Austrittsseite verjüngenden Krümmer 6 in einen Abgaskanal 7 durch Umlenkung eingeleitet. Der Abgaskanal 7 mit Heckaustritt ist dabei in achterlichen horizonal im Schiff 8 oberhalb der Wasseroberfläche angeordnet.

Hierbei wird die Umlenkanordnung aus Kollektor 5 und Krümmer 6 durch eine äußere Umhüllung 9 umgeben, so dass ein Ringraum 10 gebildet ist. Dieser Ringraum 10 ist mit dem Gehäuse 2 verbunden.

Beim Betrieb der Anordnung ist dadurch die Geschwindigkeit der Abgasströmung 4 an einer Schnittstelle 11 zum Krümmer 6 noch relativ moderat.

Die Einschnürung und Beschleunigung einer Abgasströmung 4 erfolgt mit dem Verlauf des Krümmerbereiches des Krümmers 6. So wird der Druckverlust relativ niedrig gehalten und am Austritt in den achterlichen Bereich des Abgaskanals 7 steht eine beschleunigte Strömung mit relativ geringer Rezirkulation an, die eine optimale Pumpenstrahlwirkung zur Absaugung der Kapselkühlluft über den Ringraum 10 gewährleistet.

Damit ist es möglich, eine thermisch unkritische Konstruktion zu schaffen. Ferner wird ein absoluter Unterdruck im Gehäuse 2 der Gasturbine 1 gehalten. Gleichzeitig wird eine relativ homogene Geschwindigkeitsverteilung gewährleistet.

## Patentansprüche

1. Marineschiff mit Gasturbinenantrieb und einem achterlichen etwa horizontalen Abgaskanal, der über einen Krümmer und Kollektor mit der Gasturbine und einem die Gasturbine umgebendes Gehäuse als Kapselung verbunden ist, wobei das Gehäuse eine Zuführung für Kühlluft aufweist und dem Krümmer zuführbar ist, **dadurch gekennzeichnet, dass** Krümmer (6) und Kollektor (5) in einer äusseren Umhüllung (9) unter Bildung eines Ringraumes (10) als Verlängerung und Verbindung mit dem umgebenen Gehäuse (2) der Gasturbine (1) angeordnet und die ansaugbare Kühlluft im Bereich des achterlichen Abgaskanals (7) zumischbar ist.

2. Marineschiff nach Anspruch 1, **dadurch gekennzeichnet, dass** der Austrittsbereich des Krümmers (6) im Abgaskanal (7) gegenüber dem der Gasturbine (1) zugewandten Eintrittsbereich des Krümmers (6) verjüngt ausgebildet ist.
